# EUROPÄISCHE PATENTSCHRIFT

(11) **EP 0 339 202 B1**
(45) Veröffentlichungstag und Bekanntmachung des Hinweises auf die Patenterteilung: **24.03.1993**
(21) Anmeldenummer: 89102907.6
(22) Anmeldetag: 20.02.1989
(51) Int. Cl.: B60K 41/16, B60K 41/06

(54) **Antriebseinrichtung für Maschinen und Fahrzeuge**
Driving device for machines and vehicles
Dispositif de transmission pour machines et véhicules

(30) Priorität: 08.03.1988 DE 3807599
(43) Veröffentlichungstag der Anmeldung: 02.11.1989
(73) Patentinhaber: Hydromatik GmbH, 89275 Elchingen (DE)
(72) Erfinder: Walzer, Winfried, Dr., D-7915 Elchingen (DE); Sommer, Thomas, D-7900 Ulm-Jungingen (DE)
(74) Vertreter: Körber, Wolfhart, Dr.rer.nat.

(56) Entgegenhaltungen:
- DE-A- 2 652 976
- DE-A- 3 323 694
- DE-A- 3 433 494
- DE-A- 3 436 008
- US-A- 4 648 040

## Beschreibung

Die Erfindung bezieht sich auf eine Antriebseinrichtung nach dem Oberbegriff des Anspruchs 1.

Ein Antriebsmotor mit durch ein Einstellglied stufenlos veränderlicher Drehzahl, insbesondere Dieselmotor, erzeugt ein annähernd von der Drehzahl unabhängiges Drehmoment. Fahrzeuge und Arbeitsmaschinen benötigen jedoch zur Überwindung von Arbeits- und Fahrwiderständen wie Steigungen, zur Erzeugung von Schub- bzw. Zugkräften oder zum Beschleunigen stark wechselnde Antriebskräfte. Dabei soll die installierte Antriebsleistung möglichst vollständig als Arbeitsleistung in der Antriebseinrichtung umgesetzt werden. Diese Forderung wird durch ein zwischen dem Antriebsmotor und dem Schaltgetriebe eingeschaltetes aus einer Hydropumpe und einem Hydromotor bestehenden hydrostatischen Getriebe mit einem last- (druck-) und eingangsdrehzahl- (antriebsdrehzahl-)abhängigen Regler erfüllt, der das Übersetzungsverhältnis dieses Getriebes mit zunehmender, vom Antriebsmotor aufzubringender Drehzahl verkleinert und mit zunehmender, vom Antriebsmotor aufzubringender Last (Fahrdruck) vergrößert. Dem Schaltgetriebe (häufig ein 2- oder 3-Gang-Schaltgetriebe) kommt dabei der Zweck zu, den nutzbaren Übersetzungsbereich der Antriebseinrichtung zu erhöhen.

Während der Arbeitsphasen z.B. eines Radladers fährt dieser stets im ersten Gang und verändert seine Fahrgeschwindigkeit mit Hilfe der veränderlichen Dieselmotordreh zahl und mit Hilfe des hydrostatischen Getriebes. Durch die Verwendung eines unter Last schaltbaren, mehrgängigen Lastschaltgetriebes wird es möglich, die mechanische Übersetzung auch während der Fahrt und auch unter Last zu wechseln. Werden hierbei keine Maßnahmen zur Anpassung der Abtriebsdrehzahl des hydrostatischen Getriebes und der Eingangsdrehzahl des mechanischen Schaltgetriebes vorgenommen, so tritt aufgrund der Steifheit des gesamten Antriebskomplexes ein kräftiger Schaltruck auf, welcher sich je nach Fahrzustand des Radladers mehr oder weniger störend auf das Fahrverhalten und auf die Fahrstabilität auswirken kann.

Bei einer in der DE-A 34 33 494 beschriebenen und dargestellten Antriebseinrichtung der eingangs bezeichneten Art wird das hydrostatische Getriebe und dessen Regeleinrichtung dazu ausgenutzt, eine Synchronisierung der Ausgangsdrehzahl des hydrostatischen Getriebes mit der nach dem Schaltvorgang zu erwartenden Eingangsdrehzahl des Schaltgetriebes herbeizuführen. Dabei muß die Regeleinrichtung ein völlig anderes Regelverhalten ausführen, als es ihr durch die Drehzahlregelung vorgegeben ist. Bei dieser bekannten Ausgestaltung ist nicht nur ein hoher Regelungsaufwand erforderlich, der nicht nur die Herstellungskosten verteuert, sondern auch zu einem erhöhten Verschleiß und erhöhtem Kraftstoffverbrauch führt. Durch die Synchronisation können zwar Schaltrucke vermieden werden, jedoch ergeben sich bei dieser bekannten Ausgestaltung Anpassungsschwierigkeiten im Übergangsbereich zwischen der Synchronisationsregelung und der Drehzahlregelung.

Der Erfindung liegt die Aufgabe zugrunde, eine Antriebseinrichtung der eingangs bezeichneten Art so auszugestalten, daß auf einfache Weise ein komfortables Schaltverhalten beim Herunterschalten in einen kleineren Gang erreicht wird.

Diese Aufgabe wird durch die kennzeichnenden Merkmale des Anspruchs 1 gelöst.

Bei der erfindungsgemäßen Ausgestaltung ist gewährleistet, daß die Antriebseinrichtung sich beim Schalten immer in einem Zustand positiver Leistungsübertragung befindet, nämlich einem Leistungsfluß vom Antriebsmotor zum Schaltgetriebe. Es ergibt sich zwar dann, wenn die Ausgangsdrehzahl des hydrostatischen Getriebes größer ist als die durch den gewünschten kleineren Gang bedingte Eingangsdrehzahl des Schaltgetriebes ein gewisser Schaltruck, jedoch handelt es sich bei diesem um einen beschleunigend wirkenden Schaltruck, der kaum störende Auswirkungen auf das Fahrverhalten hat, im Gegensatz zu einem verzögernd wirkenden Schaltruck, der sich dann ergibt, wenn die Ausgangsdrehzahl des hydrostatischen Getriebes kleiner ist als die durch den gewünschten kleineren Gang bedingte Eingangsdrehzahl des Schaltgetriebes, und der je nach Schaltpunkt sich so stark auswirken kann, daß in Extremfällen Antriebsglieder wie z.B. die Räder des Fahrzeuges blockieren können. Durch das zweite Kennzeichnungsmerkmal der Erfindung wird eine Sicherheit dagegen geschaffen, daß die Ausgangsdrehzahl des hydrostatischen Getriebes nach dem Schalten einen zu hohen Drehzahlwert annehmen könnte, bei dem z.B. das hydrostatische Getriebe beschädigt werden könnte (Überdrehzahlsicherung) Wenn bei der erfindungsgemäßen Ausgestaltung die Schaltung z.B. vom zweiten in den ersten Gang bei zu großer Fahrgeschwindigkeit eingeleitet wird, erfolgt kein Schalten. Will der Fahrer dennoch in den niedrigeren Gang schalten, so kann er dies durch Rücknahme des Einstellgliedes des Antriebsmotors (Gasrücknahme) oder ggf. auch durch Betätigung der Betriebsbremse herbeiführen. Dabei kann die Anordnung so getroffen sein, daß die erfindungsgemäße Schaltung dann erfolgt, wenn die Eingangsdrehzahl des Schaltgetriebes (z.B. Fahrgeschwindigkeit) so weit verringert ist, daß die im Kennzeichen des Anspruchs 1 enthaltenen Bedingungen erfüllt sind.

Vorzugsweise wird das die Schaltung einleitende Schaltsignal dann, wenn die Schaltbedingungen nicht erfüllt sind, in der elektronischen Regeleinrichtung gespeichert und der Schaltvorgang dann automatisch ausgeführt, wenn die Schaltbedingungen vorliegen.

Bei der erfindungsgemaßen Ausgestaltung erfolgt ein Schaltvorgang von einem größeren in einen kleineren Gang somit nur dann, wenn die sich durch die Regeleinrichtung einstellende Ausgangsdrehzahl des hydrostatischen Getriebes gleich oder kleiner ist als ein Drehzahlwert, bei dem die sich beim Schaltvorgang einstellende, von der durch den gewünschten kleineren Gang bedingte, von der jeweiligen Fahrgeschwindigkeit abhängige Ausgangsdrehzahl des hydrostatischen Getriebes eine vorgegebene maximale Ausgangsdrehzahl des hydrostatischen Getriebes nicht überschreitet und das Übersetzungsverhältnis des hydrostatischen Getriebes eine Mindestgröße aufweist, bei der die sich beim Schaltvorgang durch die Regeleinrichtung einstellende Ausgangsdrehzahl des hydrostatischen Getriebes gleich oder größer geworden ist als die durch den gewünschten kleineren Gang bedingte Eingangsdrehzahl des Schaltgetriebes.

Bei der erfindungsgemäßen Ausgestaltung, bei der die last- und drehzahlabhängige Drehmoment-Regelung des hydrostatischen Getriebes nicht verlassen wird, und deshalb Übergangsschwierigkeiten wie beim Stand der Technik nicht auftreten, wird die Erhöhung der Ausgangsdrehzahl des hydrostatischen Getriebes zwecks Erfüllung der kennzeichnenden Bedingungen dann erreicht, wenn beim Schalten der Antriebsmotor aufgrund des Fortfalls der Drehzahldrückung seine Drehzahl erhöht, wodurch auch die Ausgangsdrehzahl des hydrostatischen Getriebes erhöht wird.

Eine weitere Drehzahlerhöhung erfolgt durch die lastabhängige Übersetzungsveränderung beim Trennen der Kupplung.

Im üblichen Fahrbetrieb wird es meistens erforderlich sein, die Ausgangsdrehzahl des hydrostatischen Getriebes zusätzlich zu erhöhen, um die zweite Bedingung b) des Kennzeichens der Erfindung zu erfüllen. In diesem Fall muß die Antriebsmotordrehzahl erhöht werden unter Beachtung der weiteren Schaltbedingung nach Anspruch 3. Auch hier bei bleibt die drehzahl- und lastabhängige Regelung des hydrostatischen Getriebes aufrechterhalten. Bei üblichen Antriebseinrichtungen dürfte bei Positionen des Einstellgliedes von etwa 50 %, vorzugsweise 75 % der Vollgasstellung, der angestrebte Kick-Down-Effekt erreicht sein.

Gemäß Anspruch 2 ist ein handhabungsfreundlicher Schaltvorgang vorgegeben, da die Bedienungsperson den Schaltvorgang nur einmal einzuleiten braucht.

Die Ansprüche 4 und 5 umfaßen einfache und funktionsfähige Mittel zum Erfassen des Übersetzungsverhältnisses des hydrostatischen Getriebes und der vorbeschriebenen zusätzlichen Drehzahlerhöhung des Antriebsmotors bzw. hydrostatischen Getriebes.

Gemäß Anspruch 6 wird bei Verwendung eines Dieselmotors als Antriebsmotor auf einen bewährten Regler für die Einspritzpumpe zurückgegriffen, bei dessen Vorhandensein eine vorbeschriebene zusätzliche Drehzahlerhöhung leicht erreicht wird.

Die erste durch die Erfindung vorgegebene kennzeichnende Bedingung läßt sich dann besonders leicht erfüllen, wenn die beim Schalten durch das Trennen der im Schaltgetriebe vorgegebenen Kupplungen erfolgende Unterbrechung der Antriebsverbindung eine Zeitspanne gemäß Anspruch 7 umfaßt und die Antriebsmotordrehzahl erhöht wird (Anspruch 3).

Es ist möglich, die erfindungsgemäße Lösung sowohl mit einem manuellen Schaltgetriebe als auch mit einem automatischen Schaltgetriebe zu realisieren. Auf die letztere Möglichkeit bezieht sich der Anspruch 8.

Nachfolgend wird die Erfindung anhand von in einer Zeichnung dargestellten bevorzugten Ausführungsbeispielen näher erläutert. Es zeigt:
- Fig. 1: eine erfindungsgemäß ausgestaltete Antriebseinrichtung in schematischer Darstellung;
- Fig. 2: eine erfindungsgemäß ausgestaltete Antriebseinrichtung in abgewandelter Ausführungsform;
- Fig. 3: ein Funktionsdiagramm der erfindungsgemäßen Antriebseinrichtung nach Fig. 2;
- Fig. 4: ein Funktionsschaubild.

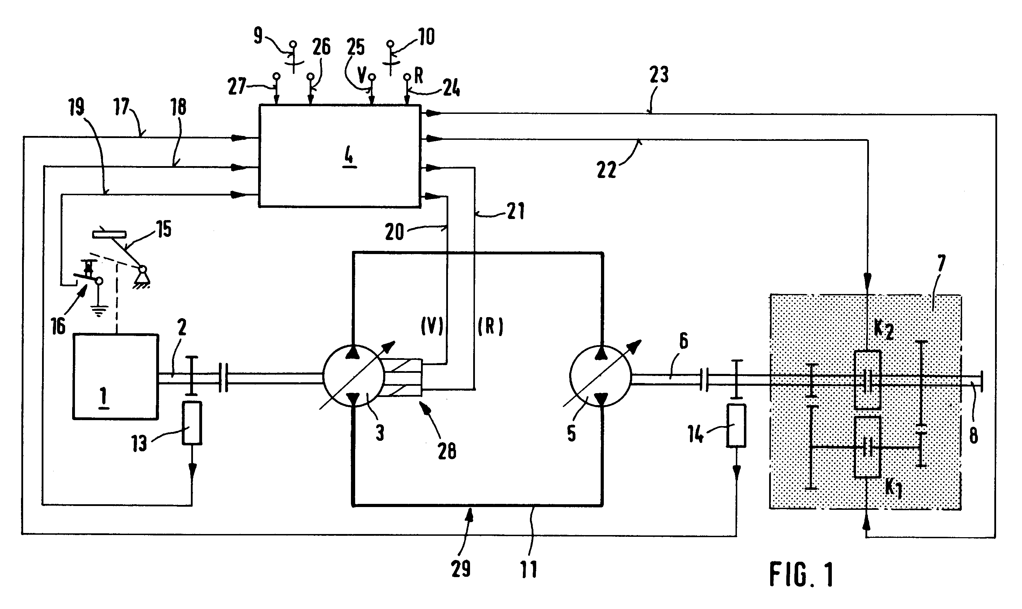

Die wesentlichen Teile der in Fig. 1 dargestellten Antriebseinrichtung sind ein Antriebsmotor 1 wechselnder Drehzahl in Form eines Verbrennungsmotors, insbesondere eines Dieselmotors, mit einer Antriebswelle 2, eine von letzterer angetriebene Pumpe 3 verstellbaren Fördervolumens, die für den Betrieb in beide Förderrichtungen eingerichtet ist, ein elektronisches Regelgerät 4, ein Hydromotor 5, der ebenfalls für beide Durchsatzrichtungen eingerichtet ist, und denen Ausgangswelle 6 mit einem Lastschaltgetriebe 7 antriebsmäßig verbunden ist, dessen Ausgangswelle mit 8 bezeichnet ist, einem Vorwahlelement 9 mit zwei Funktionsstellungen I und II für die Vorwahl eines ersten und eines zweiten Ganges, einem weiteren Vorwahlelement 10 für Vorwärts- und Rückwärtsfahrt V bzw. R, ein der Antriebswelle 2 bzw. der Welle der Pumpe 3 zugeordneter Drehzahlmesser 13, zweckmäßigerweise die Klemme der Lichtmaschine bei einem Dieselmotor, ein der Ausgangswelle 6 des Hydromotors 5 zugeordneter Drehzahlmesser 14 und ein dem Gaspedal 15 für den Antriebsmotor 1 zugeordneter Signalgeber 16, der dann ein Signal abgibt, wenn das Gaspedal in den Bereich der Vollgasstellung verstellt wird. Die Pumpe 3 und der Hydromotor 5 sind in üblicher Weise in einen hydraulischen Kreislauf bzw. eine Hauptleitung 11 eingesetzt.

Das elektronische Regelgerät 4 ist durch Signalleitungen 17 bis 27 mit den Drehzahlmessern 13,14, dem Signalgeber 16, einer allgemein mit 28 bezeichneten Verstelleinrichtung für die Pumpe 3, die beim vorliegenden Ausführungsbeispiel für Vorwärts- und Rückwartsfahrt V,R jeweils ein Verstellelement aufweist (Signalleitungen 20,21) mit Kupplungen K₁ und K₂ des Lastschaltgetriebes 7 und mit den Vorwahlelementen 9 und 10 verbunden ist. Bei diesem Ausführungsbeispiel übt das elektronische Regelgerät 4 sowohl die Regelung des Übersetzungsverhältnisses des allgemein mit 29 bezeichneten hydrostatischen Getriebes in Abhängigkeit von der Antriebsmotordrehzahl (Drehzahlmesser 13) als auch die Steuerung des Lastschaltgetriebes 7 zum Schalten aus. Das Regelgerät 4 umfaßt somit die Funktion eines drehzahl- und lastabhängigen (druckabhängigen) Reglers für das hydrostatische Getriebe 29, wobei mit zunehmender vom Antriebsmotor 1 aufzubringender Last (Drehmoment) das Übersetzungsverhältnis des hydrostatischen Getriebes 29 vergrößert wird, d.h. seine Ausgangsdrehzahl, nämlich die Drehzahl des Hydromotors 5, verringert wird.

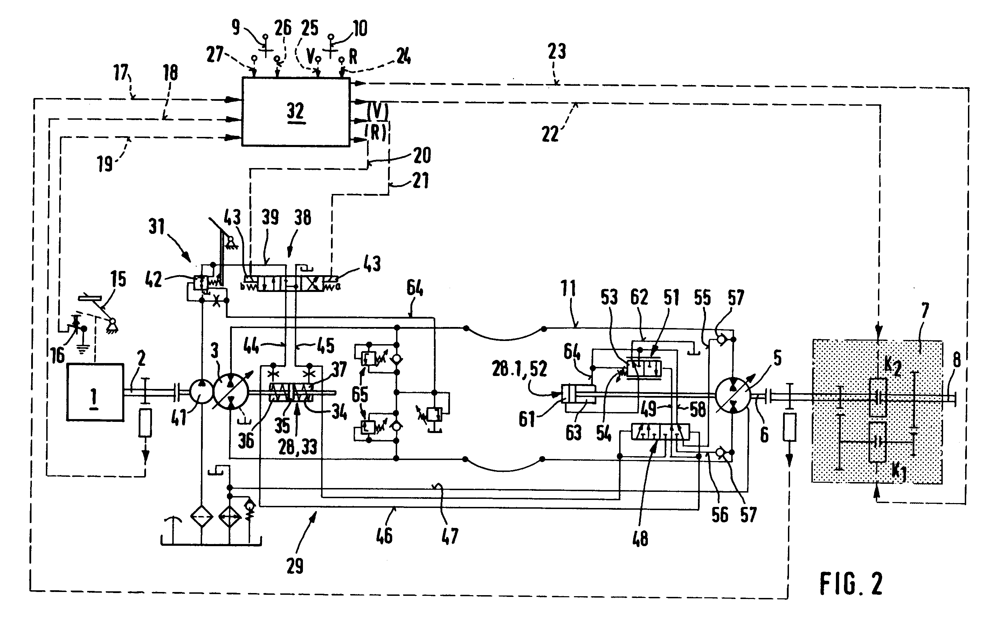

Das Ausführungsbeispiel gemäß Fig. 2, bei dem gleiche Teile mit gleichen Bezugszeichen bezeichnet sind, unterscheidet sich vom vorbeschriebenen Ausführungsbeispiel unter anderem dadurch, daß die Regelung des hydrostatischen Getriebes 29 einerseits und Schaltungsregelung bzw. -steuerung des Schaltgetriebes 7 und Vorwarts- und Rückwärtsfahrt andererseits von zwei Geräten 31, 32 durchgeführt werden, von denen das mit 31 bezeichnete Regelgerät ein hydraulischer Regler ist, während das mit 32 bezeichnete elektronische Steuergerät entsprechend dem vorbeschriebenen Unterschied die elektronische Steuerung der Schaltung und der Vorwärts-und Rückwärtsfahrt gleich dem ersten Ausführungsbeispiels ausführt. Das hydraulische Regelgerät 31 ist von der in der DE-C 22 47 437 beschriebenen Art, wobei auf das in jener Druckschrift mit dem Bezugszeichen 10 bezeichnete Ventil verwiesen wird. Das Vorwahlelement 10 entspricht dem in jener Druckschrift mit dem Bezugszeichen 23 bezeichneten Umschalt- bzw. Wegeventil. Es wird auf die in der DE-C 22 47 437 enthaltene Beschreibung in vollem Umfang Bezug genommen, um Wiederholungen zu vermeiden.

Die Pumpe 3 des Ausführungsbeispiels gemäß Fig. 2, deren Fördermenge ebenfalls in beiden Förderrichtungen verstellbar ist, wird durch einen die Verstelleinrichtung 28 bildenden Hydraulikzylinder 33 verstellt, dessen durch Federn 34 mittenzentrierter Doppelkolben 35 durch wahlweise Beaufschlagung der Arbeitsräume 36,37 verstellbar ist. Hierzu dient ein Wegeventil 38, das jeweils durch Vorwahl der Vorwärts- oder Rückwärtsfahrt V,R den einen oder anderen Arbeitsraum 36,37 mit einer Hydraulikleitung verbindet, in die eine mit der Pumpe 3 synchron angetriebene Hilfspumpe 41 fördert. In der Hydraulikleitung 39 ist eine sogenannte Druckwaage angeordnet, bestehend aus einer nicht dargestellten Drossel und einem dieser in Strömungsrichtung nachgeordneten Druckregelventil 42, das durch den in der Hydraulikleitung 39 vor der Drossel anstehenden Hilfsdruck verstellbar ist. Dem Wegeventil 38 sind Schaltmagnete 43 zugeordnet, die auch durch Proportionalmagnete gebildet sein können, die gegen andeutungsweise dargestellte, vorzugsweise einstellbare Federn wirksam sind und die über die elektrischen Signalleitungen 20,21 vom Steuergerät 32 verstellt werden.

Das hydraulische Regelgerät 31 ist auch dazu eingerichtet, die Verstelleinrichtung 28.1 des Hydromotors 5 zu beaufschlagen. Hierzu dienen von den sich zwischen dem Wegeventil 38 und dem Hydraulikzylinder 33 erstreckenden Leitungsabschnitten 44,45 weiterführende Leitungabschnitte 46,47, die ein Schaltventil 48 beaufschlagen, das deren Durchgang zu einer gemeinsamen Steuerleitung 49 steuert, mittels der ein Druckregelventil 51 beaufschlagbar ist, das die ebenfalls durch einen Hydraulikzylinder 52 gebildete Verstelleinrichtung 28.1 einstellt. Der Ventilschieber 53 des Druckregelventils 51 wird auf einer Seite vom Hilfsdruck des hydraulischen Regelgeräts 31 und auf seiner anderen Seite vom ggf. reduzierten Arbeitsdruck des hydrostatischen Getriebes 29 und zugleich von einer vorzugsweise einstellbaren Feder 54 beaufschlagt. Der Arbeitsdruck wird durch von der Hauptleitung 11 vor und hinter dem Hydromotor 5 ausgehenden Leitungsabschnitten 55,56 zugeführt, in denen in Richtung auf das Schaltventil 48 öffnende Rückschlagventile 57 angeordnet sind, deren Durchgang zu einer gemeinsamen, den Steuerschieber 53 beaufschlagenden Steuerleitung 58 ebenfalls durch das Schaltventil 48 gesteuert wird. Das Druckregelventil 51 ist in einer vom Arbeitsraum 61 des Hydraulikzylinders 52 ausgehenden Rücklaufleitung 62 angeordnet. Der andere Arbeitsraum 63 des Hydraulikzylinders 52 ist durch einen Leitungsabschnitt 64 mit der Steuerleitung 58 verbunden und somit durch den Arbeitsdruck beaufschlagbar. Infolgedessen wirken sowohl der Arbeitsdruck als auch der Hilfsdruck als Steuerdruck auf das Druckregelventil 51 und als Verstelldruck auf den Kolben des Hydraulikzylinders 52.

Die Anordnung ist so getroffen, daß der Hydromotor 5 sich in maximaler Schluckvolumeneinstellung befindet, wenn die Fördermengeneinstellung der Pumpe 3 minimal eingestellt ist und sich in minimaler Einstellung befindet, wenn die Pumpe 3 maximal eingestellt ist. Dabei ist die Anordnung auch so getroffen, daß der Hydromotor 5 erst dann in Richtung auf minimales Schluckvolumen verstellt wird, wenn die Pumpe 3 ihre maximale Fördermengeneinstellung erreicht hat. Das Wegeventil 38 steuert dabei sowohl die Pumpe 3 als auch den Hydromotor 5 hinsichtlich der jeweiligen Drehrichtung.

Der Hilfskreis dient gleichzeitig auch zur Speisung der Hauptleitung 11 des hydrostatischen Getriebes 29, wozu eine vom Druckregelventil 42 ausgehende Leitung 64 dient. Mit 65 sind Druckbegrenzungsventile für den Arbeitsdruck des hydrostatischen Getriebes 29 bezeichnet.

Im folgenden wird die Funktion der erfindungsgemäßen Ausgestaltungen, insbesondere der gemäß Fig. 2, beschrieben.

Als Eingangsgrößen für das elektronische Regel- bzw. Steuergerät 4, 32 werden
- die Drehzahl des Antriebsmotors 1
- die Drehzahl des Hydromotors 5
- die Stellung des Gangschalters 9 (I. Gang, II. Gang oder auch Automatik)
- die Stellung des Fahrtrichtungsschalters 10, sowie
- eine definierte Stellung des Gaspedals 15 (z.B. Vollgas)
benötigt.

Als Ausgangsgrößen liefert die Schaltelektronik des Regel- bzw. Steuergeräts 4, 32
- die elektrischen Signale für die Ansteuerung der Kupplungen K₁,K₂ des mechanischen Lastschaltgetriebes 7 und
- die elektrischen Signale zur Ansteuerung der Fahrtrichtungs-Schaltmagnete 43 (V,R).

Bei der hydraulischen Ausgestaltung gemäß Fig. 2 handelt es sich ansonsten um ein übliches Getriebe mit der in Mobilfahrzeugen üblichen drehzahl- und druckabhängigen Pumpen- und Motorverstellung (Hydromatik-DA-Regelung).

Aufgabe der Steuerelektronik ist es, ständig das Drehzahlverhältnis zwischen Hydromotor 5 und Antriebsmotor 1 zu ermitteln, sowie ständig zu überprüfen, ob ein Schaltwunsch des Fahrers vorliegt.

Liegt ein Schaltbefehl vom I. Gang in den II. Gang vor, so wird immer geschaltet, da sich hierbei ein positiver Schaltruck auswirkt, der kaum störend ist. Dies erklärt sich aus der Tatsache, daß beim Gangwechsel von I. nach II. der schnelldrehende Hydromotor 5 von der Kupplung des II.ten Ganges auf das geringere Drehzahlniveau des I.ten Ganges heruntergebremst werden muß. Hierbei ergibt sich keine Möglichkeit zur Änderung der Richtung des Leistungsflußes, d.h. das Fahrzeug bleibt (mit Ausnahme des Zeitintervalles zwischen dem Öffnen der Kupplungen für den I.ten Gang und dem Schließen der Kupplungen für den II.ten Gang) immer "ziehend", d.h. die Leistung wird vom Antriebsmotor 1 zum Lastschaltgetriebe 7 hin übertragen.

Liegt jedoch ein Schaltbefehl vom II. in den I. Gang vor, so wird von der Steuerelektronik 4,32 geprüft, ob
- das Gaspedal auf Vollgas (z.B. mindestens 50 %, vorzugsweise mindestens 75 %) steht,
- nach dem Schalten der Hydromotor 5 evtl. überdreht werden würde (z.B. beim Runterschalten aus zu großer Fahrgeschwindigkeit) und
- ob die Übersetzung des hydrostatischen Getriebes 29 infolge des Betriebsdruckes einer bestimmten der Steuerelektronik bekannten Mindestgröße entspricht.

Wird eine dieser drei Schaltbedingungen nicht erfüllt, dann speichert die Steuerelektronik den Schaltwunsch des Fahrers mit Hilfe einer elektronischen Schaltung ab. Schaltet der Fahrer also bei noch zu großer Geschwindigkeit vom II.ten Gang in den I.ten Gang, so ergibt sich zunächst keinerlei merkbare Reaktion. Will er dennoch in den niedrigeren Gang kommen, so muß er zwangsläufig den Fuß vom Gaspedal 15 nehmen und evtl. sogar noch mit der Betriebsbremse zusätzlich bremsen.

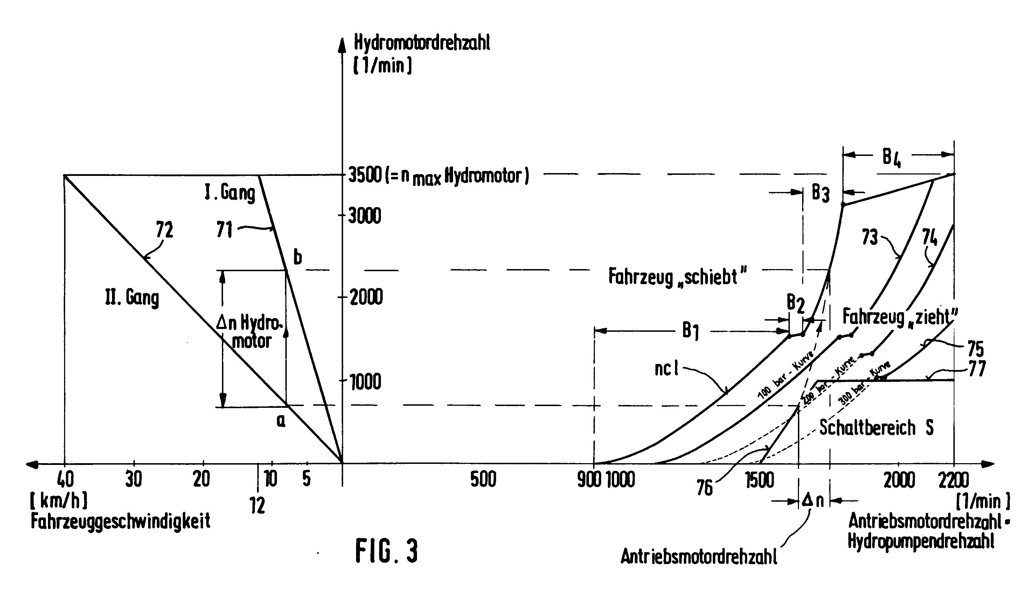

Fig. 3 zeigt ein Funktionsdiagramm, wobei auf den drei Achsen die Fahrgeschwindigkeit des Radladers, die Drehzahl des Hydromotors 5 und die Drehzahl des Antriebsmotors 1 aufgetragen sind.

Im Fahrgeschwindigkeits-/Hydromotordrehzahl-Diagramm (linker Teil in Fig. 3) sind ferner zwei Linien 71,72 (I. Gang, II. Gang) mit dem jeweiligen linearen Zusammenhang von Fahrgeschwindigkeit des Radladers und Hydromotordrehzahl eingetragen.

Im Hydromotordrehzahl/Antriebsmotordrehzahl-Diagramm (rechter Teil in Fig. 3) sind mehrere Linien (Kurven) 73,74,75 bei unterschiedlichen Fahrdrücken eingezeichnet. Die bei der Dieselmotordrehzahl n = 900 n/min beginnende, schräg nach oben führende Kurve nc1 kennzeichnet den lastlosen Zustand des Mobilgetriebes (no-load-condition Kurve), der sich bei im ohne Last durchfahrenem Drehzahlbereich des Dieselmotors 1 ergibt. Wird das Fahrzeug beispielsweise mit hochgebockten Rädern (drucklos) und mit steigender Dieselmotordrehzahl betrieben, ergibt sich die Übersetzung des Hydrogetriebes (zwischen Dieselmotordrehzahl und Hydromotordrehzahl) entsprechend der nc1-Kurve. Bewegt sich das Fahrzeug jedoch unter Last, so befindet sich der momentane Betriebspunkt in der Regel immer auf einer bestimmten Seite der nc1-Kurve (darunter: Fahrzeugt zieht; darüber: Fahrzeug schiebt, sogenannter Schubbetrieb) da die zur momentanen Dieselmotordrehzahl gehörige Hydromotordrehzahl unter Last stets kleiner als die lastlose Hydromotordrehzahl ist.

Das Umgekehrte gilt für den Zustand des Bergabfahrens eines Radladers mit voller Schaufel, bei dem das Fahrzeug nicht "zieht", sondern von der Last geschoben wird. Hierbei stützt sich die Last über das hydrostatische Getriebe 29 auf dem Dieselmotor 1 ab, und die zur momentanen Dieselmotordrehzahl gehörige Hydromotordrehzahl ist stets größer als die Hydromotordrehzahl entsprechend der nc1-Kurve (Drehzahlverhältnis befindet sich über der nc1-Kurve).

Ferner sind in der Fig. 3 im Dieselmotordrehzahl-/Hydromotordrehzahl-Diagramm weitere Kurvenabschnitte eingezeichnet, welche den Zusammenhang zwischen Dieselmotordrehzahl und Hydromotordrehzahl, also die Übersetzung des hydrostatischen Getriebes 29 bei unterschiedlichen Lastdrücken, d.h. bei unterschiedlichen Fahrwiderständen zeigt. Der Bereich B1 der Kurven kennzeichnet dabei immer den Bereich der Pumpenverstellung. Im Bereich B2 erfolgt die Erhöhung der Drehzahl des Hydromotors 5 ausschließlich aufgrund der Drehzahlzunahme des Dieselmotors 1 (Pumpe 3 auf maximales Fördervolumen; Hydromotor 5 auf maximales Schluckvolumen). Im Bereich B3 wird der Hydromotor 5 von maximales auf minimales Schluckvolumen verstellt. In diesem Bereich B3 erfolgt die Drehzahlzunahme des Hydromotors 5 also aufgrund der Drehzahlerhöhung des Dieselmotors 1 und aufgrund der Rückstellung auf einen kleiner Schwenkwinkel. Im Bereich B4 erfolgt die Drehzahlzunahme des Hydromotors 5 dann wieder ausschließlich aufgrund der Drehzahlzunahme des Dieselmotors 1 (= Pumpendrehzahl), wobei die Pumpe 3 auf maximales und der Hydromotor 5 auf minimales Durchsatzvolumen stehen.

Man erkennt aus Fig. 3 die für die vorliegende Erfindung vorteilhafte Eigenheit des Hydromatik-DA-Regelsystems, nämlich unter zunehmendem Druck, d.h. unter zunehmendem Fahrwiderstand (Last), die Übersetzung des hydrostatischen Getriebes 29 zu vergrößern. Als Übersetzung des hydrostatischen Getriebes 29 wird hier immer das Verhältnis von Hydropumpendrehzahl geteilt durch die Hydromotordrehzahl verstanden.

Man erkennt aus Fig. 3 eine weitere für die vorliegende Erfindung vorteilhafte Eigenschaft des verwendeten Hydromatik-DA-Regelsystems. Wird durch plötzliches Trennen von Hydromotor 5 und mechanischem Stufengetriebe 7 (z.B. durch Öffnen der Kupplungen für den II.ten Gang) das unter größerem Betriebsdruck stehende hydrostatische Getriebe 29 und der Dieselmotor 1 schlagartig entlastet, so ergeben sich zwei Effekte, welche die Drehzahl des Hydromotors 5 zwangsläufig erhöhen, was für den ruckarmen Anschluß im nächsten kleineren Gang (I Gang) wichtig ist. Der erste Effekt ist, daß sich das Hydrogetriebe 29 "entspannt'′ (siehe Fig. 3, Sprung von z.B. der 300 bar-Kurve 75 auf die nc1-Kurve) und dabei bei der vorhandenen Pumpendrehzahl (Dieselmotordrehzahl) die Einstellung der Pumpe 3 vergrößert und die des Hydromotors 5 verringert, was beides zu einer sprungartigen Drehzahlerhöhung des Hydromotors 5 (größere Fördermenge der Pumpe 3 und kleineres Schluckvolumen des Motors 5) führt. Der zweite Effekt besteht darin, daß sich die Drehzahl des Dieselmotors 1 beim schlagartigen Wegfall der Belastung aber gleichbleibender Gaspedalstellung ebenfalls entsprechend der Reglerkennlinie des Einspritzpumpenreglers (z.B. Alldrehzahlregler RSV von Fa. Bosch) sprungartig erhöht (um ca. 10 - 16 %). Wird nun die Schaltfreigabe zum Schalten vom II.ten Gang in den I.ten Gang über den Signalgeber l6 (Endschalter) zusätzlich an die Bedingung geknüpft, daß der Fahrer das Gaspedal 15 auch weit oder voll durchgetreten hat, so ergibt sich bei schlagartigem Wegfall der Belastung des Dieselmotors 1 eine zusätzliche Drehzahlerhöhung des Dieselmotors 1 über die erwähnten 10 - 16 % des Einspritzpumpenreglers hinaus (da ja Vollgas oder eine erhöhte Antriebsmotordrehzahl anstehen). Um dem Hydrogetriebe 29 sowie dem Dieselmotor 1 die Möglichkeit zu geben sich "zu entspannen" bzw. seine Drehzahl (Pumpendrehzahl) zu erhöhen ist eine gewiße Mindestzeitspanne zwischen dem Öffnen der Kupplung für den II.ten Gang und dem Schließen der Kupplung für den I.ten Gang erforderlich.

Beim vorbeschriebenen Durchtreten des Gaspedals 15 ergibt die zusätzliche Drehzahlzunahme des Antriebsmotors 1 aufgrund der vor dem Schaltvorgang erreichten Position des Gaspedals 15 vorzugsweise 75 % Vollgas oder mehr . Hierbei hat der Antriebsmotor 1 jedoch seine zugehörige höhere Drehzahl noch nicht erreicht. Wenn beispielsweise schlagartig (Kick-Down) Gas gegeben wird, meldet der Gaspedal-Positionsgeber 16 sofort die 75 %-(oder mehr)-Endlage (Schaltfreigabe), der Antriebsmotor 1 erreicht jedoch erst einige Zeit später seine zugehörige höhere Drehzahl.

Die Schaltbedingungen sind so eingestellt, daß sich die Drehzahl des Hydromotors 5 vor dem Schalten von II. nach I. in einem gewissen Bereich S befindet, der durch die Linien 76, 77 begrenzt ist, von denen die Linie 76 durch das Kennzeichenmerkmal a) und die Linie 77 durch das Kennzeichenmerkmal b) bestimmt ist. Liegt das Drehzahlverhältnis zwischen Hydromotor 5 und Dieselmotor 1 (Hydropumpe 3) in diesem Bereich (deutlich größere Betriebsdrücke, d.h. deutlich größerer Fahrwiderstand als im lastlosen Zustand auf der nc1-Kurve) und sind die anderen Schaltbedingungen ebenfalls erfüllt, so schaltet die Steuerelektronik 4,32 zuerst die Kupplung für den II.ten (Hydromotordrehzahl steht auf der durch den Punkt a gekennzeichneten Drehzahl) Gang ab. In der danach folgenden Totzeit (ohne irgendeinen eingelegten Gang) muß sich jetzt die Drehzahl des Dieselmotors 1 und des Hydromotors 5 wie oben beschrieben (um Δ n-Hydromotor in Fig. 3) erhöhen können. Die Totzeit muß groß genug (einige zehntel Sekunden) sein, damit sich die Drehzahl des Hydromotors 5 mindestens auf den zu erwartenden Wert (vorzugsweise noch etwas größer) der Eingangsdrehzahl des mechanischen Lastschaltgetriebes 7 im I.ten Gang (Fig. 3: Punkt b) aufgrund der beschriebenen zwei oder drei (a, b und Anspruch 3) Effekte erhöhen kann.

Im Rahmen der Erfindung ist auch die Verwirklichung eines automatischen Gangwechsels möglich. Die Automatikversion unterscheidet sich von der halbautomatischen Version dadurch, daß in Abhängigkeit der Hydromotordrehzahl und in Abhängigkeit des gerade eingeschalteten Ganges der Schaltbefehl für den Gangwechsel bei Erreichen von bestimmten einstellbaren Drehzahlgrenzwerten automatisch erzeugt wird. Die Logik des Herunterschaltens ist identisch mit der bereits beschriebenen erfindungsgemäßen Logik der Drehzahlanpassung des Hydromotors 5 an das mechanische Lastschaltgetriebe 7. Mit der Automatikversion kann damit ein Fahrverhalten ähnlich einem Automobil mit Automatikgetriebe und Kick-Down-Effekt erzielt werden.

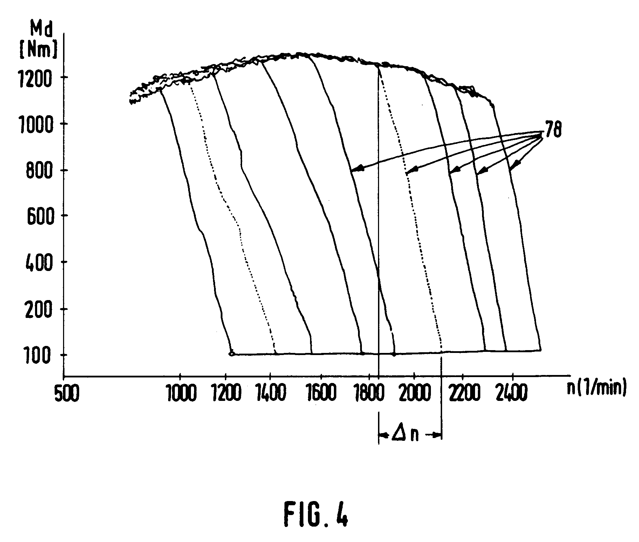

Aus Fig. 4 läßt sich die erreichbare Drehmoment-Ausnutzung des Antriebsmotors 1 sowie die Drehzahlerhöhung bei Momentenentlastung erkennen. Δₙ in Fig. 4 (Drehzahlerhöhung bei schlagartiger Momentenentlastung durch Öffnen der Kupplung unter Last) entspricht Δₙ Antriebsmotordrehzahl in Fig. 3 im Hydromotordrehzahl/Antriebsmotordrehzahl-Diagramm. Die mit 78 bezeichneten Linien stellen gleichbleibende Einstellgliedstellungen bzw. Gaspedalstellungen dar. Mit M_{d} ist das an das hydrostatische Getriebe 29 abgegebene Drehmoment bezeichnet.

Mit der erfindungsgemäßen Lösung ist es somit möglich, den Fahrkomfort von Mobilfahrzeugen mit hydrostatischem Getriebe und nachgeschaltetem mechanischem Lastschaltgetriebe unter Beibehaltung der Fahrsicherheit ganz erheblich zu steigern, ohne den Aufwand auf hydraulischer Seite zu erhöhen.

## Patentansprüche

1. Automotive Antriebseinrichtung für Maschinen und Fahrzeuge, insbesondere Fahrantriebseinrichtung für Baufahrzeuge wie Radlader, Bagger und Raupen, bestehend aus
- einem Antriebsmotor (1) mit durch ein Einstellglied (15) stufenlos veränderlicher Drehzahl,
- einem in Abhängigkeit von der Antriebsmotordrehzahl und in Abhängigkeit des Fahrdruckes durch eine Regeleinrichtung (4, 31) geregelten hydrostatischen Getriebe (29),
- einem dem Getriebe (29) nachgeordneten Schaltgetriebe (7), insbesondere Lastschaltgetriebe, und
- einer Schalteinrichtung für das Schaltgetriebe (7) mit einer elektronischen Steuerschaltung und einem Betätigungselement (9) zum Schalten,
**dadurch gekennzeichnet,** daß die Schalteinrichtung einen Schaltvorgang von einem größeren in einen kleineren Gang nur dann zuläßt, wenn folgende Schaltbedingungen erfüllt sind:
a) die Ausgangsdrehzahl des hydrostatischen Getriebes (29) liegt vor dem Schaltvorgang unter einem Mindestwert,
b) der Lastdruck des hydrostatischen Getriebes (29) und damit sein Übersetzungsverhältnis erreicht vor dem Schaltvorgang eine vom Fahrwiderstand verursachte Mindestgröße,
wobei Mindestwert und Mindestgröße derart bemessen sind, daß auch nach dem Schaltvorgang ein Leistungsfluß vom Antriebsmotor zum Schaltgetriebe gewährleistet ist.

2. Antriebseinrichtung nach Anspruch 1, dadurch gekennzeichnet, daß der mittels des Betätigungselements (9) eingegebene Schaltbefehl dann, wenn die Schaltbedingungen nicht erfüllt sind, gespeichert wird, und der Schaltvorgang dann automatisch erfolgt, wenn die Schaltbedingungen zu einem späteren Zeitpunkt erfüllt werden.

3. Antriebseinrichtung nach Anspruch 1 oder 2, dadurch gekennzeichnet, daß der Schaltvorgang nur dann erfolgt, wenn folgende weitere Schaltbedingung erfüllt ist: das Einstellglied (15) des Antriebsmotors (1) befindet sich in einer von seiner Lehrlaufstellung in Richtung Vollgas verstellten Position, vorzugsweise im letzten Viertel seines Einstellweges in Richtung Vollgas.

4. Antriebseinrichtung nach einem der Ansprüche 1 bis 3, dadurch gekennzeichnet, daß zur Ermittlung des Übersetzungsverhältnisses des hydrostatischen Getriebes (29) ein die Drehzahl des Antriebsmotors (1) oder einen entsprechenden Wert ermittelnder Signalgeber (13) und ein die Ausgangsdrehzahl des hydrostatischen Getriebes (29) oder einen entsprechenden Wert ermittelnder Signalgeber (14) vorgesehen sind.

5. Antriebseinrichtung nach Anspruch 3 oder 4, dadurch gekennzeichnet, daß dem Einstellglied (15) ein dessen Verstellposition ermittelnder Sensor zugeordnet ist.

6. Antriebseinrichtung nach einem der Ansprüche 1 bis 5, dadurch gekennzeichnet, daß der Antriebsmotor (1) ein Dieselmotor mit einem die Einspritzpumpe regelnden Alldrehzahlregler ist.

7. Antriebseinrichtung nach einem der Ansprüche 1 bis 6, dadurch gekennzeichnet, daß die Zeitspanne zwischen dem Trennen der Kupplung (K₂) für den großen Gang (II) und dem Schließen der Kupplung (K₁) für den kleinen Gang (I) des mechanischen Schaltgetriebes (7) so groß bemessen ist, daß sich die Ausgangsdrehzahl des hydrostatischen Getriebes (29) nach dem Trennen der Kupplung (K₂) für den großen Gang (II) auf die zu erwartende Drehzahl des Schaltgetriebes (7) nach dem Schließen der Kupplung (K₁) für den kleineren Gang (I) erhöhen kann.

8. Antriebseinrichtung nach einem der Ansprüche 1 bis 7, dadurch gekennzeichnet, daß die Schaltbefehle zum Schalten vom kleinen in den großen Gang (II) und vom großen in den kleinen Gang (I) in Abhängigkeit des jeweils gerade geschalteten Ganges (I, II) und in Abhängigkeit der Ausgangsdrehzahl des hydrostatischen Getriebes (29) selbsttätig erzeugt werden.

9. Antriebseinrichtung nach einem der Ansprüche 1 bis 8, dadurch gekennzeichnet, daß Hydropumpe (3) und/oder Hydromotor (5) des hydrostatischen Getriebes jeweils durch eine hydraulische oder elektrohydraulische Verstellvorrichtung (28, 28.1) verstellbar ist bzw. sind.

10. Antriebseinrichtung nach Anspruch 9, dadurch gekennzeichnet, daß die hydraulische Verstellvorrichtung (28, 28.1) durch einen Steuerdruck verstellbar ist, dessen Höhe von der Antriebsmotordrehzahl abhängig ist.

## Claims

1. Automotive drive for machines and vehicles, in particular a travelling drive system for construction vehicles such as wheel loaders, excavators and tracked vehicles, comprising
- a driving motor (1) of which the speed can be continuously varied by means of a control member (15);
- a hydrostatic transmission (29) controlled depending on the speed of the driving motor and on the travelling pressure by means of a control device (4, 31);
- a gear shift transmission (7), in particular a change-under-load gear shift transmission, arranged after the hydrostatic transmission (29); and
- shifting means for the gear shift transmission (7) having an electronic control circuit and an operating element (9) for shifting,
characterised in that the shifting means permits a shifting operation from a higher to a lower gear only when the following requirements for shifting are met:
a) before the shifting operation the output speed of the hydrostatic transmission (29) is below a minimun value,
b) before the shifting operation the load pressure of the hydrostatic transmission (29) and with that its transmission ratio reaches a minimum magnitude produced by the travelling resistance,
the minimum value and the minimum magnitude being such that even after the shifting operation a power flow from the drive motor to the gear shift transmission is assured.

2. Drive according to claim 1, characterised in that the shifting command supplied by means of the operating element (9) is stored if the shifting requirements are not met, and the shifting operation automatically occurs when the shifting requirements are met at a later time.

3. Drive according to claim 1 or 2, characterised in that the shifting operation only occurs when the following further requirement for shifting is met: the control member (15) of the driving motor (1) is in a position displaced from its idling position towards full throttle, preferably in the last quarter of its adjusting path towards full throttle.

4. Drive according to one of claims 1 to 3, characterised in that in order to determine the transmission ratio of the hydrostatic transmission (29) a detector (13) determining the speed of the driving motor (1) or a value corresponding thereto, and a detector (14) determining the output speed of the hydrostatic transmission (29) or a value corresponding thereto are provided.

5. Drive according to claim 3 or 4, characterised in that a sensor determining the adjusted position of the control member (15) is associated with said member.

6. Drive according to one of claims 1 to 5, characterised in that the driving motor (1) is a diesel engine having an all-speed regulator controlling the injection pump.

7. Drive according to one of claims 1 to 6, characterised in that the time interval between disengaging the coupling (K₂) for the high gear (II) and engaging the coupling (K₁) for the low gear of the mechanical gear shift transmission (7) is long enough for the output speed of the hydrostatic transmission, after the coupling (K₂) for the higher gear (II) has been disengaged, to increase to the expected speed of the gear shift transmission (7) after engaging the coupling (K₁) for the lower gear (I).

8. Drive according to one of claims 1 to 7, characterised in that the shifting commands for shifting from the low to the high gear (II) and from the high to the low gear (I) are automatically produced depending on the respective just shifted gear (I, II) and depending on the output speed of the hydrostatic transmission (29).

9. Drive according to one of claims 1 to 8, characterised in that hydraulic pump (3) and/or hydraulic motor (5) of the hydrostatic transmission can be adjusted in each case by means of a hydraulic or electro-hydraulic adjusting device (28, 28.1).

10. Drive according to claim 9, characterised in that the hydraulic adjusting device (28, 28.1) can be adjusted by means of a control pressure, the level of which is dependent upon the driving motor speed.

## Revendications

1. Dispositif d'entraînement automobile pour machines et véhicules, en particulier dispositif d'entraînement pour le déplacement d'engins de chantiers tels que chargeurs sur roues, excavatrices et engins à chenilles, se composant de :
- un moteur d'entraînement (1) à vitesse progressivement variable au moyen d'un organe de réglage (15),
- une transmission hydrostatique (29) réglée par un dispositif de régulation (4, 32) en fonction de la vitesse de rotation du moteur d'entraînement et en fonction de la pression de marche,
- une boîte de vitesses (7) disposée à la suite de la transmission hydrostatique (29), en particulier une boîte pouvant changer de vitesse en charge, et
- un dispositif de manoeuvre pour la boîte de vitesses (7) avec un circuit de commande électronique et un élément actionneur (9) pour le changement de vitesse,
**caractérisé** en ce que le dispositif de manoeuvre n'admet l'opération de passage d'une vitesse supérieure à une vitesse inférieure que lorsque les conditions de passage suivantes sont remplies :
a) la vitesse de sortie de la transmission hydrostatique (29) est inférieure à une valeur minimale avant l'opération de changement de vitesse,
b) la pression de charge de la transmission hydrostatique (29) et par suite son taux de démultiplication atteint, avant l'opération de changement de vitesse, une grandeur minimale provoquée par la résistance au roulement, la valeur minimale et la grandeur minimale étant telles que, même après l'opération de changement de vitesse, un transfert de puissance à partir du moteur d'entraînement vers la boîte de vitesse est assuré.

2. Dispositif d'entraînement selon la revendication 1, caractérisé en ce que l'ordre de changement de vitesse introduit au moyen de l'élément actionneur (9) est mis en mémoire quand les conditions autorisant le changement de vitesse ne sont pas remplies, et en ce que l'opération de changement de vitesse a lieu ensuite automatiquement quand les conditions pour le changement de vitesse se trouvent remplies à un instant ultérieur.

3. Dispositif d'entraînement selon la revendication 1 ou 2, caractérisé en ce que l'opération de changement de vitesse n'a lieu que quand est remplie la condition supplémentaire suivante : l'organe de réglage (15) du moteur d'entraînement (1) se trouve dans une position écartée de sa position de marche à vide en direction de sa position de pleins gaz, de préférence dans le dernier quart de sa course de réglage en allant vers la position de pleins gaz.

4. Dispositif d'entraînement selon une des revendications 1 à 3, caractérisé en ce que sont prévus, pour mesurer le taux de démultiplication de la transmission hydrostatique (29), un capteur (13) mesurant la vitesse de rotation du moteur d'entraînement (1) ou une valeur correspondante à cette vitesse, et un capteur (14) mesurant la vitesse de sortie de la transmission hydrostatique (29) ou une valeur correspondante.

5. Dispositif d'entraînement selon la revendication 3 ou 4, caractérisé en ce qu'un capteur mesurant la position de réglage de l'organe de réglage (15) est associé à ce dernier.

6. Dispositif d'entraînement selon une des revendications 1 à 5, caractérisé en ce que le moteur d'entraînement (1) est un moteur diesel avec un régulateur de vitesse agissant sur la pompe d'injection.

7. Dispositif d'entraînement selon une des revendications 1 à 6, caractérisé en ce que le délai entre la séparation de l'embrayage (K₂) pour la vitesse supérieure (II) et la fermeture de l'embrayage (K₁) pour la vitesse inférieure (I) de la boîte de vitesses mécanique (7) est tel que la vitesse de sortie de la transmission hydrostatique (29) peut s'accroître après la séparation de l'embrayage (K₂) pour la vitesse supérieure (II) pour atteindre la vitesse à attendre de la boîte de vitesse (7) après la fermeture de l'embrayage (K₁) pour la vitesse inférieure.

8. Dispositif d'entraînement selon une des revendications 1 à 7, caractérisé en ce que les ordres d'exécution d'un changement de vitesse pour passer de la vitesse inférieure à la vitesse supérieure (II) et pour passer de la vitesse supérieure à la vitesse inférieure (I) sont produits automatiquement en fonction de la vitesse (I, II) qui est précisément enclenchée à ce moment, et en fonction de la vitesse de sortie de la transmission hydrostatique (29).

9. Dispositif d'entraînement selon une des revendications 1 à 8, caractérisé en ce que la pompe hydraulique (3) et/ou le moteur hydraulique (5) de la transmission hydrostatique (29) est ou sont réglables respectivement au moyen d'un dispositif de réglage (28, 28.1) hydraulique ou électro-hydraulique.

10. Dispositif d'entraînement selon la revendication 9, caractérisé en ce que le dispositif hydraulique de réglage (28, 28.1) est réglable au moyen d'une pression de commande dont la hauteur dépend de la vitesse de rotation du moteur d'entraînement.
